# EUROPÄISCHE PATENTSCHRIFT

(11) **EP 2 260 225 B1**
(45) Veröffentlichungstag und Bekanntmachung des Hinweises auf die Patenterteilung: **26.09.2012**
(21) Anmeldenummer: 09728786.6
(22) Anmeldetag: 31.03.2009
(51) Int. Cl.: F16L 9/14, B32B 37/14, F24F 13/02, B64D 13/00, F16L 9/19, F24F 13/00, B29K 105/06

(54) **VERBESSERTES KLIMAROHR, INSBESONDERE FÜR FLUGZEUGE**
IMPROVED CLIMATE TUBE, PARTICULARLY FOR AIRPLANES
TUBE DE CLIMATISATION AMÉLIORÉ, EN PARTICULIER POUR AVIONS

(30) Priorität: 31.03.2008 DE 102008016462; 31.03.2008 US 40751
(43) Veröffentlichungstag der Anmeldung: 15.12.2010
(73) Patentinhaber: Airbus Operations GmbH, 21129 Hamburg (DE)
(72) Erfinder: HÖFLE, Roland, 88045 Friedrichshafen (DE); ROY, Markus, 88489 Wain (DE); STÜTZLE, Hubert, 88471 Laupheim (DE); STRAUBING, Michael, 89604 Allmendingen (DE)
(74) Vertreter: Beyer, Andreas
(86) Internationale Anmeldenummer: PCT/EP2009/002334
(87) Internationale Veröffentlichungsnummer: WO 2009/121557

(56) Entgegenhaltungen:
- EP-A- 0 607 602
- EP-A- 1 364 772
- EP-A- 1 878 562
- DE-A1- 3 246 755
- DE-A1- 10 012 832
- DE-A1-102005 023 148
- DE-A1-102005 061 838
- DE-U1- 20 001 437
- JP-A- 5 237 961
- US-A- 4 036 617
- US-A- 4 120 347

## Beschreibung

Die Erfindung betrifft ein Klimarohr, insbesondere für Flugzeuge, mit einer inneren Schicht und einer äußeren Schicht aus Faserverbundkunststoffmaterial. Klimarohre dieser Art sind z.B. im Flugzeugbau wohlbekannt und bilden einen Teil des Klimatisierungssystems eines Flugzeugs. Durch Klimarohre wird beispielsweise erwärmte Luft von einer Aufbereitungseinheit, einem sogenannten Klimapack, in die Kabine eines Flugzeugs geleitet. Bisher war es üblich, Klimarohre aus mehreren dünnen Lagen eines Faserverbundkunststoffmaterials, sogenannten Prepregs, zu fertigen, wie zum Beispiel in der EP 1 364 772 A1. Die Anzahl der verwendeten Materiallagen richtete sich nach den Stabilitätsanforderungen, die an ein gegebenes Klimarohr zu stellen sind. Rohre, geeignet als Klimarohre, mit allen technischen Merkmalen des Oberbegriff von Anspruch 1 sind aus der DE 3246755 A1 oder der JP 5237961 A bekannt.

Klimarohre zur Frischluftzufuhr müssen isoliert werden, um im Flugzeug eine unerwünschte Kondensation an den Rohrflächen zu verhindern. Üblicherweise wird deshalb auf aus dem Stand der Technik bekannte Klimarohre außen ein flexibler Schaum in geeigneter Dicke aufgebracht.

Zur Befestigung herkömmlicher Klimarohre in z.B. einem Flugzeug werden die Rohre mittels Rohrschellen an Haltern fixiert, welche mit der Flugzeugstruktur verbunden sind. Handelt es sich um ein außen mit Schaum isoliertes Klimarohr, so muss die Rohrbefestigung ein Distanzprofil umfassen, damit eine Wärmeleitung zwischen der Flugzeugstruktur und dem Rohrkörper minimiert ist, d.h. um eine thermisch entkoppelte Befestigung des Rohres an der Flugzeugstruktur zu gewährleisten.

Der Erfindung liegt die Aufgabe zugrunde, ein verbessertes Klimarohr anzugeben, das insbesondere zum Einsatz in Flugzeugen geeignet ist.

Diese Aufgabe ist erfindungsgemäß durch ein Klimarohr gelöst, das die im Patentanspruch 1 angegebenen Merkmale aufweist. Bei dem erfindungsgemäßen Klimarohr ist zwischen der inneren und der äußeren Schicht aus Faserverbundkunststoffmaterial ein zumindest nahezu vollständig umlaufender Wabenkern angeordnet, der mit der inneren und der äußeren Schicht verbunden ist und dessen radiale Erstreckung um ein Vielfaches größer als die radiale Erstreckung der inneren und äußeren Schicht ist. Damit ist gemeint, dass die radiale Erstreckung des Wabenkerns einige Mal so groß ist wie die Dicke der inneren oder äußeren Schicht. Vorzugsweise ist die radiale Abmessung des Wabenkerns mindestens fünfmal so groß wie die Dicke der inneren Schicht oder der äußeren Schicht, jedoch kann die radiale Abmessung des Wabenkerns ohne Weiteres auch achtmal, zehnmal oder fünfzehnmal größer als die Dicke einer der beiden Deckschichten sein. Die Dicke (radiale Abmessung) des Wabenkerns eines erfindungsgemäßen Klimarohrs ergibt sich einerseits aus Stabilitätsanforderungen und andererseits aus der geforderten Isolierung des Klimarohrs. Wird die Dicke des Wabenkerns so gewählt, dass sie zumindest in etwa der Dicke der bisher zur Isolierung erforderlichen Schaumstoffschicht entspricht, so ergibt sich eine gleichwertige Isolierwirkung. Das Aufbringen einer Schaumstoffschicht auf das Klimarohr ist deshalb nicht mehr notwendig.

Die innere Schicht und die äußere Schicht, die auch als Deckschichten bezeichnet werden, können glasfaser- und/oder kohlefaserverstärkte und mit Kunstharz imprägnierte Verbundlaminate sein. Ein solches Verbundlaminat wird häufig als Prepreg bezeichnet. Der Wabenkern kann z.B. aus mit Kunstharz imprägnierten Papierwaben bestehen.

Ein erfindungsgemäßes Klimarohr weist gegenüber herkömmlichen Klimarohren mehrere Vorteile auf: Es ist aufgrund des Wabenkerns deutlich steifer und verformt sich daher bei einer Druckbelastung (Innen- oder Außendruck) wesentlich weniger. Die durch den Sandwichaufbau (innere Schicht, Wabenkern, äußere Schicht) erzielte höhere Stabilität ermöglicht es zudem, dass ein erfindungsgemäßes Klimarohr selbst als Halterung für weitere Systeme dienen kann, beispielsweise kann an einem erfindungsgemäßen Klimarohr ein weiteres Klimarohr befestigt werden und muss nicht wie üblich separat mit der Flugzeugstruktur verbunden werden. Bei Klimarohren, die mit Unterdruck beaufschlagt werden, kann die Anzahl der Materiallagen aus Faserverbundkunststoff deutlich verringert werden, da der Wabenkern zu einer Gesamtsteifigkeit führt, die auch ohne viele Lagen aus Faserverbundkunststoff gleich oder besser als bei herkömmlichen Klimarohren ist. Da zudem der Wabenkern ein geringeres Flächengewicht hat, sind erfindungsgemäße Unterdruckklimarohre auch leichter als bisher üblich. Schließlich kann, wie bereits erwähnt, der bisher zur Isolierung erforderliche Schaumstoff wegfallen, da der Wabenkern bei geeigneter Auslegung (d.h. bei ausreichender Dicke) eine gleichwertige Isolierwirkung besitzt.

Um das Biegen des Wabenkerns in die Rohrform zu erleichtern, ist bei bevorzugten Ausführungsformen des erfindungsgemäßen Klimarohrs der Wabenkern in einer Richtung quer zur Längserstreckung der einzelnen Waben vorgestreckt bzw. expandiert. Der Querschnitt der einzelnen Waben des Wabenkerns wird dadurch länglich deformiert und kann sich deshalb besser an die zur Erzielung der Rohrform erforderliche Krümmung anpassen. Beim Biegen des Wabenkerns in die Rohrform findet oberhalb einer gedachten Mittelebene des Wabenkerns eine Dehnung der vorgereckten Seitenwände und unterhalb der gedachten Mittelebene eine Stauchung der vorgereckten Seitenwände jeder Wabe statt.

Die aus Faserverbundkunststoffmaterial bestehende innere und äußere Schicht ist aus jeweils zumindest einer Materiallage gebildet. Falls es aus Stabilitätsgründen wünschenswert ist, kann die innere Schicht und/oder die äußere Schicht jeweils aus mehreren Materiallagen bestehen.

Durch das Formen des Wabenkerns in die Rohrform ergeben sich erfindungsgemäß zwei längs verlaufende Stoßkanten. Diese Stoßkanten sind erfindungsgemäß mit einer Lage aus Faserverbundkunststoffmaterial umgeben, um die Struktur des Wabenkerns zu schützen und um eine gute Verbindung der beiden Stoßkanten zu ermöglichen. Zur Erhöhung der Gesamtfestigkeit des Klimarohrs ist bei bevorzugten Ausgestaltungen desselben vorgesehen, dass sich im Bereich der zuvor genannten, längs verlaufenden Stoßkanten wenigstens zwei Materiallagen der inneren Schicht überlappen.

Bei einer bevorzugten Weiterbildung eines erfindungsgemäßen Klimarohrs ist auf seiner Außenseite ein Zusatzrohr unmittelbar befestigt, d.h. ohne Halter. Insbesondere kann die unmittelbare Befestigung des Zusatzrohrs durch eine Klebung erfolgen. Das Zusatzrohr kann beispielsweise dazu dienen, einen abgezweigten Luftstrom einer Sensorik zuzuführen, um die Temperatur oder den Feuchtigkeitsgehalt des Luftstroms oder ähnliches zu messen. Auch kann das Zusatzrohr dazu dienen, elektrische Steuerleitungen aufzunehmen. In einer besonders bevorzugten Ausgestaltung ist das Zusatzrohr auf der Außenseite des Klimarohrs teilvertieft angeordnet, d.h. es ist zum Teil in der Außenseite des Klimarohrs versenkt. Das Maß der Vertiefung auf der Außenseite führt dabei nicht zu einer Dickenverminderung des Wabenkerns des Klimarohrs, sondern ist lediglich in den Öffnungsquerschnitt des Klimarohrs hinein verschoben, so dass das Maß der Vertiefung auf der Außenseite den Öffnungsquerschnitt an der Innenseite des Klimarohrs entsprechend vermindert. Die Wanddicke des Klimarohrs bleibt somit in dem Bereich der außenseitigen Vertiefung gleich derjenigen Wanddicke, die das Klimarohr in Bereichen ohne außenseitige Vertiefung aufweist. Neben der durch diese Lösung erreichten Platzersparnis und Bauteileinsparung ist auch eine genaue Positionierung des Zusatzrohres gewährleistet, ohne dass spezielle Montagevorrichtungen wie Halter oder ähnliches zum Einsatz kommen.

Der Querschnitt eines erfindungsgemäßen Klimarohrs ist vorzugsweise kreisförmig, oval oder elliptisch, kann jedoch auch andere Querschnittsformen annehmen. Mit dem erfindungsgemäßen Klimarohr ist es auch möglich, den Querschnitt über seine Länge variierend auszuführen. Beispielsweise kann der Querschnitt eines erfindungsgemäßen Klimarohrs zunächst kreisförmig sein und dann oval oder elliptisch sein und schließlich, falls gewünscht, wieder kreisförmig werden. Durch geeignetes Recken und Dehnen des Wabenkerns lassen sich solche Querschnittsänderungen ohne Stabilitätseinbußen des Klimarohrs bewerkstelligen.

Bevorzugte Ausführungsformen erfindungsgemäßer Klimarohre sind dazu ausgestaltet, ein weiteres Klimarohr zu haltern. Gemäß einer Ausführungsform wird dies durch einen Einsatz (sogenannter Insert) erreicht, der in dem Wabenkern des Klimarohrs befestigt ist und der auf seiner aus dem Klimarohr hervorstehenden Seite zum Halten eines weiteren Klimarohres ausgestaltet ist, beispielsweise mittels einer Rohrschelle. Gemäß einer anderen Ausführungsform ist ein Halter, beispielsweise ein schellenförmiger Halter, auf dem Klimarohr befestigt, der ein weiteres Klimarohr hattern kann.

Erfindungsgemäße Klimarohre erlauben es aber auch, einen Zusatzkanal oder mehrere Zusatzkanäle integral auszubilden. Wenn der Zusatzkanal lediglich einen kleinen Querschnitt aufweisen muss, kann ein solcher Zusatzkanal durch eine in Längsrichtung des Klimarohrs verlaufende Aussparung des Wabenkerns gebildet sein. Mit anderen Worten, der Zusatzkanal verläuft dann innerhalb der Wand eines erfindungsgemäßen Klimarohrs. Ein solcher Zusatzkanal kann dazu dienen, ein strömendes Fluid aufzunehmen, er kann jedoch ebenso gut auch dazu dienen, elektrische oder andere Leitungen zu beherbergen.

Soll der Zusatzkanal einen größeren Querschnitt haben, dann kann zusätzlich zur in Längsrichtung des Klimarohrs verlaufenden Aussparung des Wabenkerns auch die äußere Schicht aus Faserverbundkunststoffmaterial ausgespart sein. In der so erzielten, in Längsrichtung des Klimarohrs verlaufenden Aussparung ist dann ein teilrohrförmiges Einsatzteil mit dem gewünschten freien Querschnitt befestigt, beispielsweise durch Kleben. Je nach Anforderungszweck kann die Wand des teilrohrförmigen Einsatzteils so aufgebaut sein wie das Klimarohr selbst, d.h. mit einem Wabenkern. Es kann sich bei der Wand des teilrohrförmigen Einsatzteils aber auch lediglich um eine oder mehrere Lagen aus Faserverbundkunststoffmaterial handeln. Der Öffnungsquerschnitt des teilrohrförmigen Einsatzteils kann in seiner Form von dem des Klimarohrs abweichen und insbesondere flacher ausgebildet sein. Trotz des teilweise ausgesparten Wabenkerns weist ein solches Klimarohr mit einem oder mehreren Zusatzkanälen eine hohe Stabilität auf.

Schließlich kann ein erfindungsgemäßes Klimarohr, unabhängig davon, ob es einen wie zuvor beschriebenen Zusatzkanal aufweist oder nicht, in Längsrichtung durch wenigstens eine Trennwand unterteilt sein. Auf diese Weise lassen sich beispielsweise Zu- und Abluft in einem einzigen Klimarohr getrennt voneinander führen. Die Trennwand bzw. die Trennwände, die als Sandwichstege ausgebildet sein können, sind ohne Weiteres dazu in der Lage, Druckdifferenzen zwischen einzelnen Fluidströmen zu widerstehen und eine thermische Isolierung zwischen den einzelnen Fluidströmen bereitzustellen. Falls eine thermische Isolierung nicht erforderlich ist, können die Trennwand oder die Trennwände auch aus einfachem Faserverbundkunststoffmaterial bestehen.

Die Herstellung erfindungsgemäßer Klimarohre erfolgt im Prinzip genauso wie die Herstellung von Sandwichplatten mit einem Wabenkem, die im Flugzeugbau vielfach Verwendung finden. Genauer gesagt werden nacheinander die innere Schicht, der Wabenkern und die äußere Schicht in eine Form eingelegt, die Form wird dann geschlossen und anschließend erwärmt, um die innere Schicht, den Wabenkern und die äußere Schicht miteinander zu verbacken. Nach dem Abkühlen kann das fertige, eine strukturelle Einheit bildende Klimarohr aus der Form entnommen werden.

Im Folgenden werden bevorzugte Ausführungsbeispiele erfindungsgemäßer Klimarohre anhand schematischer Figuren näher erläutert. Es zeigt:
- Fig. 1A: einen Querschnitt durch ein erstes Ausführungsbeispiels eines erfindungsgemäßen Klimarohrs mit ovalem Querschnitt,
- Fig. 1B: eine Darstellung ähnlich Fig. 1A eines zweiten Ausführungsbeispiels mit kreiszylindrischern Querschnitt,
- Fig. 2: den Verbindungsbereich zweier längsverlaufender Stoßkanten eines erfindungsgemäßen Klimarohrs in vergrößerter Darstellung,
- Fig. 3: ein Klimarohr ähnlich Fig. 1A mit einer Halterung für ein weiteres Klimarohr,
- Fig. 4A: eine perspektivische Darstellung eines Klimarohrs ähnlich Fig. 1A mit einem unmittelbar an der Außenseite des Klimarohrs befestigten Zusatzrohr,
- Fig. 4B: einen Teilbereich des in Fig. 4A gezeigten Ausführungsbeispiels im Querschnitt,
- Fig. 5: eine räumliche Ansicht eines Klimarohrs mit einem großen und einem kleinen Zusatzkanal, und
- Fig. 6: eine räumliche Darstellung eines Klimarohrs ähnlich Fig. 1A, dessen Innenraum durch zwei in Längsrichtung verlaufende Trennwände in drei Kammern unterteilt ist.

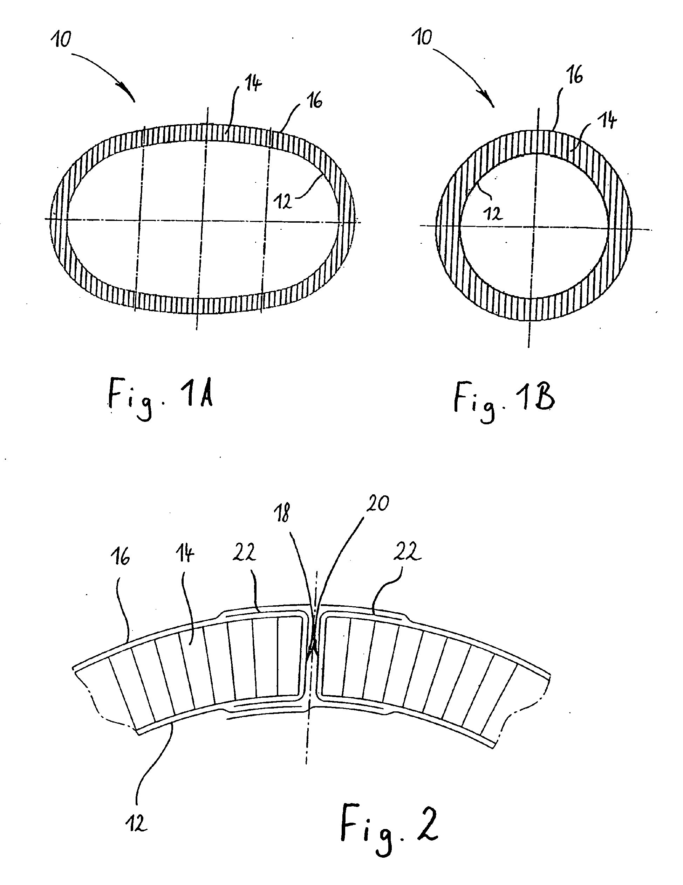

Die Figuren 1A und 1B zeigen im Querschnitt zwei Ausführungsbeispiele eines Klimarohrs 10, das insbesondere zur Verwendung in Flugzeugen als Teil der Flugzeugklimaanlage geeignet ist. Das Klimarohr 10, das gemäß Fig. 1A einen ovalzylindrischen und gemäß Fig. 1B einen kreiszylindrischen Querschnitt aufweist, besteht aus einer inneren Schicht 12, einem Wabenkern 14 und einer äußeren Schicht 16. Wie die Figuren 1A und 1B zeigen, ist die radiale Erstreckung des Wabenkerns 14 groß gegenüber der Dicke (in radialer Richtung) der inneren Schicht 12 und der äußeren Schicht 16.

Sowohl die innere Schicht 12 als auch die äußere Schicht 16, die auch als Deckschichten des Klimarohrs 10 bezeichnet werden, bestehen aus einem plattenförmigen faserverstärkten und mit Kunstharz imprägnierten Verbundlaminat, zumeist als Prepreg bezeichnet. Jede Schicht 12, 16 weist wenigstens eine Materiallage aus dem genannten Verbundlaminat auf, kann jedoch auch mehrere Materiallagen umfassen.

Der Wabenkern 14 besteht aus einer ebenfalls mit Kunstharz imprägnierten Wabenstruktur, beispielsweise aus mit Kunstharz imprägnierten Papierwaben. Solche Wabenkerne sind Fachleuten aus Sandwichplatten bekannt, die im Flugzeugbau vielfach Verwendung finden, insbesondere beim Innenausbau einer Flugzeugkabine.

Die innere Schicht 12, der Wabenkern 14 und die äußere Schicht 16 sind bei einem fertiggestellten Klimarohr 10 fest miteinander verbunden, beispielsweise durch Verbacken in einer Form (nicht dargestellt). Das Klimarohr 10 hat somit eine homogene, durchgehenden Sandwichstruktur, die in einer hohen Steifigkeit resultiert.

Aus Fig. 2 ergibt sich der Aufbau eines typischen Ausführungsbeispiels eines Klimarohrs 10 genauer. Der Wabenkern 14, dessen einzelne Waben radial ausgerichtet sind, ist innen von einer hier einlagigen Schicht 12 aus Faserverbundkunststoffmaterial und außen von einer hier ebenfalls einlagigen Schicht 16 aus Faserverbundkunststoffmaterial bedeckt. Der zunächst flächige Wabenkern 14 ist in die gewünschte Rohrform gebogen so dass sich zwei einander zugewandte, längs verlaufende Stoßkanten 18, 20 erfindungsgemäß bilden. Um eine stabile Verbindung dieser Stoßkanten 18, 20 zu ermöglichen, ist der Wabenkern 14 erfindungsgemäß im Bereich seiner Etoßkanten 18, 20 mit einer Lage 22 aus Faserverbundkunststoffmaterial umgeben. Die innere Schicht 12 und die äußere Schicht 16 sind dabei jeweils über die Lage 22 geführt.

Wie Fig. 2 erkennen lässt, überlappen zudem im Bereich der Stoßkanten 18, 20 mehrere Materiallagen der inneren Schicht 12, um im Bereich der Stoßkanten 18, 20 eine einwandfreie Verbindung herzustellen.

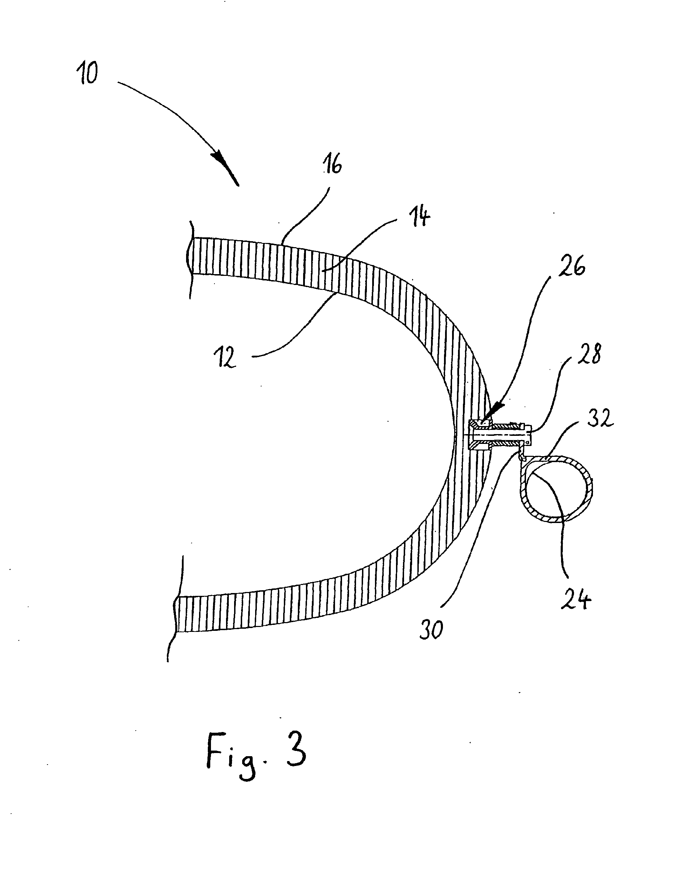

Fig. 3 zeigt im Schnitt einen Teil eines Klimarohrs 10 ähnlich dem in Fig. 1A gezeigten, bei dem zur Halterung eines weiteren Klimarohrs 24 ein Insert 26 in dem Wabenkern 14 des Klimarohrs 10 befestigt ist, beispielsweise durch Verkleben. Mittels einer in das Insert 26 geschraubten Schraube 28 ist eine Befestigungslasche 30 eines schellenförmigen Rohrhalters 32 an dem Insert 26 und damit am Klimarohr 10 befestigt. Das weitere Klimarohr 24 erstreckt sich durch den Rohrhalter 32 und wird auf diese Weise von ihm gehalten.

Aufgrund seines hohen, durch die einzelnen Waben des Wabenkerns 14 gebildeten Freiraumanteils hat der Wabenkern 14 sehr gute temperaturisolierende Eigenschaften. Eine herkömmlich erforderliche Schaumstoffschicht, die zur Isolierung außen auf Klimarohre aufgebracht wurde, ist daher nicht mehr erforderlich.

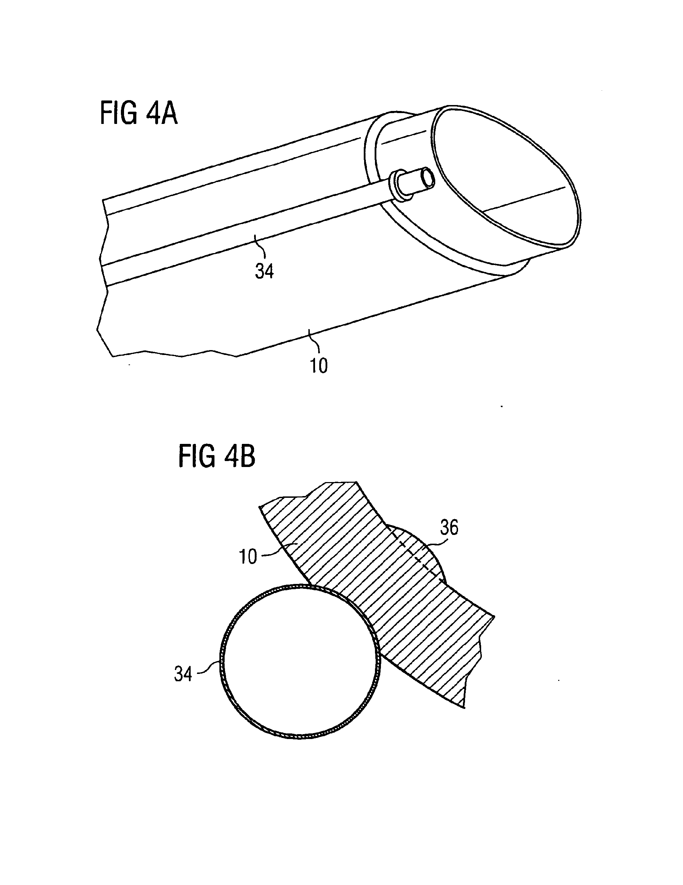

Fig. 4A zeigt ein weiteres Ausführungsbeispiel eines Klimarohrs 10, bei dem im Unterschied zu dem in Fig. 3 gezeigten Ausführungsbeispiel ein Zusatzrohr 34 nicht mittels spezieller Halter am Klimarohr 10 befestigt ist, sondern auf der Außenseite des Klimarohrs 10 unmittelbar durch eine Klebung befestigt ist. Um eine zur zuverlässigen Verklebung ausreichende Fläche zu erhalten und zugleich die Abmessungen des Gesamtbauteils zu verringern, ist das Zusatzrohr 34 auf der Außenseite des Klimarohrs 10 teilvertieft angeordnet, d.h. die Außenseite des Klimarohrs 10 ist mit einer einen Teil der äußeren Umfangsgestalt des Zusatzrohrs 34 aufnehmenden Vertiefung versehen, in der das Zusatzrohr 34 verklebt wird (siehe insbesondere Fig. 4B). Die Wanddicke des Klimarohrs 10 ändert sich durch das Vorsehen der Vertiefung nicht, denn der die Wand des Klimarohrs 10 bildende Schichtaufbau 12, 14, 16 wird im Bereich der das Zusatzrohr 34 aufnehmenden Vertiefung nach innen gedrückt, so dass sich auf der Innenseite des Klimarohrs 10 eine dem Maß der Vertiefung entsprechende Ausbauchung 36 bildet.

Ersichtlich ist bei dem in den Fig. 4A und 4B gezeigten Ausführungsbeispiel auch eine sehr gute Positionierung des Zusatzrohrs 34 erreicht, das für verschiedenste Zwecke verwendet werden kann, etwa zur Aufnahme elektrischer Steuerleitungen oder auch zur Führung eines abgezweigten Fluidstroms.

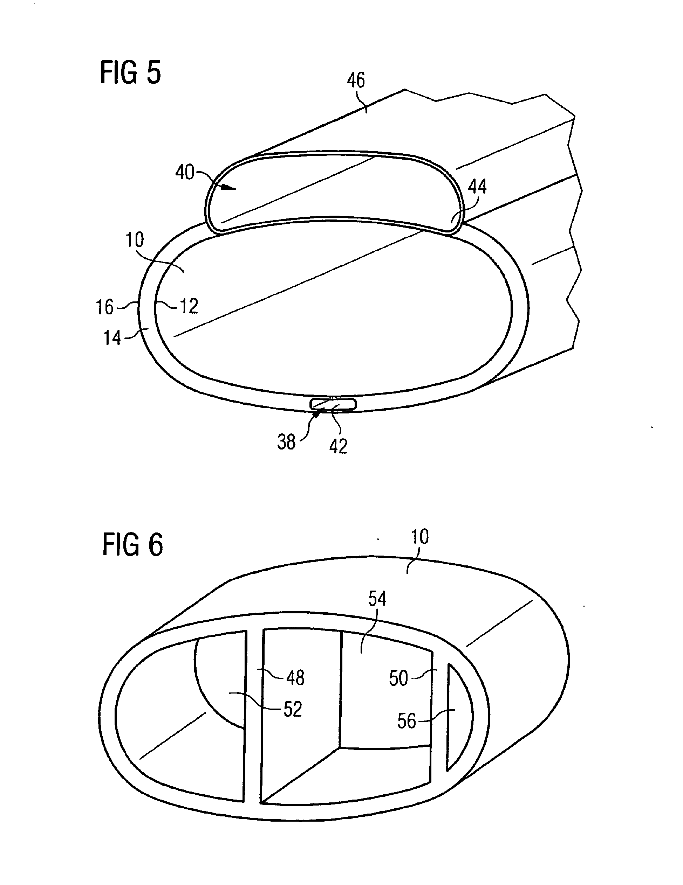

Fig. 5 zeigt ein weiteres Ausführungsbeispiel eines Klimarohrs 10 mit einem ersten Zusatzkanal 38 kleinen Querschnitts und einem zweiten Zusatzkanal 40 größeren Querschnitts. Beide Zusatzkanäle 38, 40 erstrecken sich entlang des Klimarohrs 10.

Der erste, kleinere Zusatzkanal 38 ist durch eine Aussparung 42 im Wabenkern 14 des Klimarohrs 10 gebildet. Die Aussparung 42 kann, wie in Fig. 5 dargestellt, einen ovalen Querschnitt aufweisen, jedoch kann der Querschnitt auch rechteckig, quadratisch oder mit anderer Form ausgeführt sein. Der durch die Aussparung 42 gebildete erste Zusatzkanal 38 ist somit nach innen durch die innere Schicht 12 des Klimarohrs 10, zu den Seiten durch den Wabenkern 14 und nach außen durch die äußere Schicht 16 des Klimarohrs 10 begrenzt.

Der zweite, größere Zusatzkanal 40, der im gezeigten Ausführungsbeispiel auf der entgegengesetzten Seite des Klimarohrs 10 angeordnet ist, basiert ebenfalls auf einer, hier größeren Aussparung 44 des Wabenkerns 14, jedoch ist zusätzlich auch die äußere Schicht 16 des Klimarohrs 10 in diesem Bereich ausgenommen und es ist in der Aussparung 44 ein Einsatzteil 46 befestigt, beispielsweise durch Kleben, dessen Wand im gezeigten Beispiel ebenfalls aus Faserverbundkunststoffmaterial besteht. Das Einsatzteil 46 hat einen teilrohrförmigen Querschnitt, der mit seiner offenen Seite in die Aussparung 44 eingepasst und darin befestigt wird. Der Querschnitt des sich so ergebenden, zweiten Zusatzkanals 40 ist zur Größenminimierung relativ flach gehalten, kann jedoch auch eine andere als die dargestellte Form haben. Auch kann die Wand des Einsatzteils 46 ebenso aufgebaut sein wie die Wand des Klimarohrs 10, d.h. mit einem zwischen zwei Schichten aufgenommenen Wabenkern.

Sowohl der erste Zusatzkanal 38 als auch der zweite Zusatzkanal 40 sind vielfältig einsetzbar. So kann z.B. der erste Zusatzkanal 38 Steuerleitungen beherbergen, während der zweite Zusatzkanal 40 einen Fluidstrom führt, der vom im Klimarohr 10 geführten Fluidstrom getrennt ist. Diese Anwendungsbeispiele und die in Fig. 5 dargestellten Größenverhältnisse zwischen den einzelnen Kanälen sind lediglich beispielhaft und können vom Fachmann je nach Anforderung ohne Weiteres abgeändert werden.

Fig. 6 schließlich zeigt eine noch weitere Möglichkeit, um ein Klimarohr 10 mit mehreren voneinander getrennten Kanälen zu versehen. Wie aus Fig. 6 ersichtlich, ist bei dem dort gezeigten Ausführungsbeispiel der freie Öffnungsquerschnitt des Klimarohrs 10 in Längsrichtung durch eine erste Trennwand 48 und eine zweite Trennwand 50 unterteilt, die beide in Längsrichtung des Klimarohrs 10 verlaufen. Die beiden Trennwände 48, 50 können wie dargestellt eine Dicke haben, die der Dicke der Wand des Klimarohrs 10 entspricht, und sie können auch ebenso wie die Wand des Klimarohrs 10 aufgebaut sein, d.h. aus zwei äußeren Schichten aus Faserverbundkunststoffmaterial, zwischen denen sich ein Wabenkern befindet. Alternativ ist es auch möglich, die Trennwände 48, 50 nur durch eine Wand aus Faserverbundkunststoffmaterial zu bilden. In jedem Fall ergeben sich im Inneren des Klimarohrs 10 durch die beiden Trennwände 48, 50 drei parallel verlaufende Kammern 52, 54 und 56, deren freier Öffnungsquerschnitt durch die Lage der Trennwände 48, 50 bestimmt ist und entsprechend den gestellten Anforderungen variiert werden kann. Der Verwendungszweck der drei Kammern 52, 54 und 56 ist frei definierbar, d.h. es müssen nicht alle drei Kammern 52, 54 und 56 zur Fluidführung verwendet werden, sondern es kann beispielsweise die Kammer 56 elektrische Leitungen beherbergen.

## Patentansprüche

1. Klimarohr (10), insbesondere für Flugzeuge, mit einer inneren Schicht (12) und einer äußeren Schicht (16) aus Faserverbundkunststoffmaterial,
wobei zwischen der inneren (12) und der äußeren Schicht (16) ein zumindest nahezu vollständig umlaufender, mit der inneren (12) und der äußeren Schicht (16) verbundener Wabenkern (14) angeordnet ist, dessen radiale Erstreckung um ein Vielfaches größer als die radiale Erstreckung der inneren (12) und äußeren Schicht (16) ist, **dadurch gekennzeichnet, dass** der Wabenkern (14) längs verlaufende Stoßkanten (18, 20) aufweist, die mit einer Lage (22) aus Faserverbundkunststoffmaterial umgeben sind.

2. Klimarohr nach Anspruch 1,
**dadurch gekennzeichnet, dass** der Wabenkern (14) in einer Richtung vorgestreckt ist.

3. Klimarohr nach Anspruch 1 oder 2,
**dadurch gekennzeichnet, dass** die innere Schicht (12) und/oder die äußere Schicht (16) aus mehreren Materiallagen besteht.

4. Klimarohr nach einem der vorangehenden Ansprüche
**dadurch gekennzeichnet, dass** im Bereich der längs verlaufenden Stoßkanten (18, 20) die innere Schicht (12) überlappt.

5. Klimarohr nach einem der vorhergehenden Ansprüche,
**dadurch gekennzeichnet, dass** auf seiner Außenseite ein Zusatzrohr (34) unmittelbar befestigt ist, insbesondere durch eine Klebung.

6. Klimarohr nach Anspruch 5,
**dadurch gekennzeichnet, dass** das Zusatzrohr (34) auf der Außenseite des Klimarohrs teilvertieft angeordnet ist, wobei das Maß der Vertiefung auf der Außenseite an der Innenseite des Klimarohrs den Öffnungsquerschnitt entsprechend vermindert.

7. Klimarohr nach einem der vorhergehenden Ansprüche,
**dadurch gekennzeichnet, dass** es ein weiteres Klimarohr (24) haltert.

8. Klimarohr nach Anspruch 7,
**dadurch gekennzeichnet, dass** ein Insert (26) in dem Wabenkern (14) des Klimarohrs (10) befestigt ist, der das weitere Klimarohr (24) hält.

9. Klimarohr nach Anspruch 7,
**dadurch gekennzeichnet, dass** ein Halter auf dem Klimarohr (10) befestigt ist, der das weitere Klimarohr (24) hält.

10. Klimarohr nach einem der vorhergehenden Ansprüche,
**dadurch gekennzeichnet, dass** ein Zusatzkanal (38, 40) durch eine in Längsrichtung des Klimarohrs verlaufende Aussparung (42, 44) des Wabenkerns (14) gebildet ist.

11. Klimarohr nach Anspruch 10,
**dadurch gekennzeichnet, dass** die äußere Schicht (16) aus Faserverbundkunststoffmaterial ebenfalls ausgespart ist und ein teilrohrförmiges Einsatzteil (46) in der Aussparung (44) befestigt ist.

12. Klimarohr nach einem der vorhergehenden Ansprüche,
**dadurch gekennzeichnet, dass** der Querschnitt des Klimarohrs (10) kreisförmig, oval oder elliptisch ist.

13. Klimarohr nach Anspruch 12,
**dadurch gekennzeichnet, dass** der Querschnitt des Klimarohrs (10) über seine Länge variiert.

14. Klimarohr nach einem der vorhergehenden Ansprüche,
**dadurch gekennzeichnet, dass** der Querschnitt des Klimarohrs (10) in Längsrichtung durch wenigstens eine Trennwand (48, 50) unterteilt ist.

## Claims

1. Climate tube (10), in particular for aircraft, having an inner layer (12) and an outer layer (16) of fiber composite plastic material,
wherein disposed between the inner layer (12) and the outer layer (16) is an at least almost completely circumferential honeycomb core (14), which is connected to the inner (12) and the outer layer (16) and the radial extent of which is multiple times greater than the radial extent of the inner (12) and outer layer (16),
**characterized in that** the honeycomb core (14) has longitudinally extending abutting edges (18, 20), which are surrounded by a ply (22) of fiber composite plastic material.

2. Climate tube according to claim 1,
**characterized in that** the honeycomb core (14) is pre-stretched in one direction.

3. Climate tube according to claim 1 or 2,
**characterized in that** the inner layer (12) and/or the outer layer (16) comprises a plurality of material plies.

4. Climate tube according to one of the preceding claims,
**characterized in that** the region of the longitudinally extending abutting edges (18, 20) the inner layer (12) overlaps.

5. Climate tube according to one of the preceding claims,
**characterized in that** on to its exterior a secondary pipe (34) is directly fastened, in particular by means of an adhesive bond.

6. Climate tube according to claim 5,
**characterized in that** the secondary pipe (34) is disposed partially embedded in the exterior of the climate tube, wherein the extent of embedding in the exterior correspondingly reduces the opening cross section at the interior of the climate tube.

7. Climate tube according to one of the preceding claims,
**characterized in that** it supports a further climate tube (24).

8. Climate tube according to claim 7,
**characterized in that** an insert (26) is fastened in the honeycomb core (14) of the climate tube (10) and supports the further climate tube (24).

9. Climate tube according to claim 7,
**characterized in that** a support is fastened on the climate tube (10) and supports the further climate tube (24).

10. Climate tube according to one of the preceding claims,
**characterized in that** an additional duct (38, 40) is formed by means of a recess (42, 44) of the honeycomb core (14) extending in longitudinal direction of the climate tube.

11. Climate tube according to claim 10,
**characterized in that** a recess is likewise formed in the outer layer (16) of fiber composite plastic material and a partial-pipe-shaped insert part (46) is fastened in the recess (44).

12. Climate tube according to one of the preceding claims,
**characterized in that** the cross section of the climate tube (10) is circular, oval or elliptical.

13. Climate tube according to claim 12,
**characterized in that** the cross section of the climate tube (10) varies over its length.

14. Climate tube according to one of the preceding claims,
**characterized in that** the cross section of the climate tube (10) is subdivided in longitudinal direction by means of at least one partition wall (48, 50).

## Revendications

1. Tube de climatisation (10), en particulier pour avions, comportant une couche intérieure (12) et une couche extérieure (16) en plastique composite renforcé de fibres,
un noyau en nid d'abeilles (14), qui est solidaire de la couche intérieure (12) et de la couche extérieure (16) et dont l'étendue radiale est de beaucoup supérieure à celle de la couche intérieure (12) et de la couche extérieure (16), étant placé sur au moins presque toute la circonférence entre la couche intérieure (12) et la couche extérieure (16),
**caractérisé en ce que** ledit noyau en nid d'abeilles (14) présente des arêtes de joint (18, 20) qui s'étendent longitudinalement et sont enveloppées d'une couche (22) en plastique composite renforcé de fibres.

2. Tube de climatisation selon la revendication 1,
**caractérisé en ce que** le noyau en nid d'abeilles (14) est étendu en avant dans une direction.

3. Tube de climatisation selon la revendication 1 ou 2,
**caractérisé en ce que** la couche intérieure (12) et/ou la couche extérieure (16) sont composées de plusieurs couches de matériau.

4. Tube de climatisation selon l'une des revendications précédentes,
**caractérisé en ce que** la couche intérieure (12) est chevauchante dans la zone des arêtes de joint (18, 20) s'étendant longitudinalement.

5. Tube de climatisation selon l'une des revendications précédentes,
**caractérisé en ce qu'**un tube supplémentaire (34) est directement fixé, en particulier par collage, sur sa face extérieure.

6. Tube de climatisation selon la revendication 5,
**caractérisé en ce que** le tube supplémentaire (34) est placé partiellement enfoncé sur la face extérieure du tube de climatisation, la cote de l'enfoncement sur la face extérieure réduisant de manière correspondante la section d'ouverture sur la face intérieure du tube de climatisation.

7. Tube de climatisation selon l'une des revendications précédentes,
**caractérisé en ce qu'**il supporte un tube de climatisation supplémentaire (24).

8. Tube de climatisation selon la revendication 7,
**caractérisé en ce qu'**un insert (26) est fixé dans le noyau en nid d'abeilles (14) du tube de climatisation (10), lequel insert supporte le tube de climatisation supplémentaire (24).

9. Tube de climatisation selon la revendication 7,
**caractérisé en ce qu'**un support est fixé sur le tube de climatisation (10) pour supporter le tube de climatisation supplémentaire (24).

10. Tube de climatisation selon l'une des revendications précédentes,
**caractérisé en ce qu'**un canal supplémentaire (38, 40) est formé par un évidement (42, 44) du noyau en nid d'abeilles (14), lequel évidement court dans le sens longitudinal du tube de climatisation.

11. Tube de climatisation selon la revendication 10,
**caractérisé en ce que** la couche extérieure (16) en plastique composite renforcé de fibres est également évidée et qu'un élément rapporté (46) se présentant sous forme tubulaire partielle est fixé dans l'évidement (44).

12. Tube de climatisation selon l'une des revendications précédentes,
**caractérisé en ce que** la section du tube de climatisation (10) est circulaire, ovale ou elliptique.

13. Tube de climatisation selon la revendication 12,
**caractérisé en ce que** la section du tube de climatisation (10) varie sur sa longueur.

14. Tube de climatisation selon l'une des revendications précédentes,
**caractérisé en ce que** la section du tube de climatisation (10) est divisée dans le sens longitudinal par au moins une cloison de séparation (48, 50).
